(19) Europäisches Patentamt
European Patent Office
Office européen des brevets

(11) **EP 2 375 552 B1**

(12) **EUROPÄISCHE PATENTSCHRIFT**

(45) Veröffentlichungstag und Bekanntmachung des Hinweises auf die Patenterteilung:
**22.08.2018   Patentblatt 2018/34**

(51) Int Cl.:
*H02M 1/32* (2007.01)       *H02H 9/08* (2006.01)
*H02M 7/487* (2007.01)
*H02M 1/00* (2006.01)       *H02J 3/38* (2006.01)
                            *H02M 1/12* (2006.01)

(21) Anmeldenummer: **10159233.5**

(22) Anmeldetag: **07.04.2010**

(54) **Verfahren zur Betriebsführung eines Wechselrichters**

Method for operating an inverter

Procédé pour commander un onduleur

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**12.10.2011   Patentblatt 2011/41**

(73) Patentinhaber: **SMA Solar Technology AG**
**34266 Niestetal (DE)**

(72) Erfinder:
• **Bremicker, Sven**
**36211, Alheim (DE)**
• **De Brabandere, Karel**
**34119, Kassel (DE)**
• **Müller, Tobias**
**34355, Escherode (DE)**

(74) Vertreter: **Lahnor, Peter**
**SMA Solar Technology AG**
**Corporate Intellectual Property Management**
**Sonnenallee 1**
**34266 Niestetal (DE)**

(56) Entgegenhaltungen:
EP-A1- 2 107 672     EP-A2- 1 235 339
EP-A2- 1 641 111     WO-A1-2010/078669

• **ALEXANDER L JULIAN ET AL: "Elimination of Common-Mode Voltage in Three-Phase Sinusoidal Power Converters" IEEE TRANSACTIONS ON POWER ELECTRONICS, IEEE SERVICE CENTER, PISCATAWAY, NJ, US, Bd. 14, Nr. 5, 1. September 1999 (1999-09-01), XP011043341 ISSN: 0885-8993**
• **"State-of-the-Art Carrier PWM Techniques: A Critical Evaluation", IEEE TRANSACTIONS ON INDUSTRY APPLICATIONS, 1 January 1988 (1988-01-01), XP055114462, Retrieved from the Internet: URL:http://ieeexplore.ieee.org/iel1/28/164/00002867.pdf**

**Beschreibung**

Die Erfindung betrifft ein Verfahren zur Betriebsführung eines zur DC/AC-Spannungswandlung ausgelegten Wechselrichters.

Ein gattungsgemäßes Verfahren ist aus der EP 1 641 111 A2 bekannt.

Bei elektrischen Anlagen, in denen eine von photovoltaischen Elementen erzeugte Gleichspannung mittels transformatorloser Wechselrichter in Wechselspannung gewandelt wird, können - abhängig von der Schaltung und dem gewählten Modulationsverfahren - kapazitive Ableitströme auftreten, da das Potential des Solargenerators gegenüber dem Erdpotential schwanken kann. Hierdurch kann beispielsweise eine Fehlerstromschutzeinrichtung des Wechselrichters negativ beeinflusst werden.

Ein Grund für das Auftreten von Ableitströmen ist eine Wechselspannungskomponente, welche der von den photovoltaischen Elementen erzeugten Gleichspannung aufgrund der Schaltungstopologie und der Modulation des Wechselrichters überlagert ist. Über sogenannte Ableitkapazitäten (externe, des photovoltaischen Elementes und wechselrichterinterne) fließen die Ableitströme gegen Erdpotential (PE) ab.

Es wird zwar versucht, diesen Effekt durch eine Optimierung der Wechselrichtertopologie zu verringern, trotz einer solchen Optimierung kann der Effekt kapazitiver Ableitströme jedoch in bestimmten Betriebszuständen auch bei transformatorlosen Wechselrichtern neuerer Bauart auftreten, insbesondere bei Wechselrichtern, die nicht in konventioneller Sinus-Dreieck-Modulationsart betrieben werden.

Einen derartigen - hinsichtlich seines Wirkungsgrades besonders optimierten und vorteilhaften - transformatorlosen Wechselrichter neuerer Bauart in sogenannter "Dreipunkt-Topologie" offenbart die EP 2 107 672 A2. Dargestellt ist ein dreiphasiger transformatorloser Wechselrichter mit einem Zwischenkreis, dessen gleichspannungsseitige Eingänge über zwei in Reihe geschaltete Kapazitäten miteinander verbunden sind, wobei durch die beiden Kapazitäten ein mittlerer Spannungspunkt definiert wird, der nicht mit dem Neutralleiter des Wechselspannungsnetzes verbunden ist.

Bei einer derartigen Dreipunkt-Topologie ist die eingangsseitige Spannung $U_{DC}$ gegen PE bei normaler Pulsweitenmodulation (PWM), die nach dem bekannten Prinzip der Sinus-Dreieck-Modulation erzeugt wird, eine Gleichspannung, so dass in diesem Fall, bei dem eine Zwischenkreisspannung am Eingang der Wechselrichterbrücke mindestens so groß wie die zweifache Scheitelspannung des Netzspannungssignals sein muss, damit der Modulationsgrad der PWM kleiner oder gleich 1 ist, zunächst keine Ableitströme auftreten. Reduziert man die Zwischenkreisspannung auf einen Wert unterhalb der zweifachen Scheitelspannung des Netzspannungssignals ergibt sich für die PWM eine Übermodulation, d. h. ein Modulationsgrad größer als 1, was zu Verzerrungen für den wechselrichterausgangsseitigen Strom führt.

Zur Erreichung eines möglichst guten Wirkungsgrads ist es günstig, die Zwischenkreisspannung so niedrig wie möglich zu halten. Hierzu sind Verfahren, insbesondere für dreiphasige Wechselrichter, bekannt, bei denen beispielsweise bei herkömmlicher Sinus-Dreieck-Modulation ein zeitvarianter Offset, beispielsweise ein Dreiecksignal mit dreifacher Netzfrequenz oder ein Sinussignal mit dreifacher Netzfrequenz, hinzugefügt wird, so dass trotz des Auftretens von Zwischenkreisspannungswerten unterhalb der zweifachen Scheitelspannung des Netzspannungssignals im PWM-Signal selbst keine Übermodulation, und damit auch keine Stromverzerrung des in ein Netz eingespeisten Wechselrichterausgangsignals auftritt. Zu solchen Modulationsverfahren zählen beispielsweise auch die unter den Begriffen "Raumzeiger Modulation" oder "Sinus-Dreieck-Modulation mit dritter Harmonischer" bekannten Verfahren.

Bei modifizierten Sinus-Dreieck-Modulationsverfahren, insbesondere bei den zuvor genannten Verfahren der Sinus-Dreieck-Modulation mit zeitvariantem Offset, entsteht, beispielsweise - aber nicht nur - bei dem zuvor genannten transformatorlosen Wechselrichter aus der EP 2 107 672 A2, topologiebedingt eine Wechselspannungskomponente mit der dreifachen Netzfrequenz zwischen dem eingangsseitigen mittleren Spannungspunkt und PE, die einen kapazitiven Wechselstrom über die Ableitkapazitäten verursacht (Ableitstrom).

Wechselrichter besitzen üblicherweise eine Fehlerstromschutzeinrichtung, die die Differenzströme auf der Wechselstromseite erfasst und im Fehlerfall, z. B. zur Vermeidung einer Gefährdung von Personen oder Beschädigung des Wechselrichters selbst, den Wechselrichter ausschaltet. Der gemessene Differenzstrom beinhaltet jedoch nicht nur den eigentlich zu erfassenden Fehlerstrom, sondern zusätzlich, in vektorieller Summe, auch einen gegebenenfalls vorliegenden Ableitstrom, so dass zu große Ableitströme zu einer irrtümlichen Auslösung der Fehlerstromschutzeinrichtung und damit zu einem ungewollten Abschalten des Wechselrichters führen können. Ein Verzicht auf Modulationsverfahren, bei denen topologiebedingt Ableitströme auftreten können, verschlechtert den Wirkungsgrad wieder und stellt insofern keine geeignete Lösung dieses Problems dar.

Die Erfindung hat vor diesem Hintergrund die Aufgabe, die nachteiligen Auswirkungen von Ableitströmen auf den Betrieb und das Betriebsverhalten von Wechselrichtern zu begrenzen und dabei vorzugsweise auch einen möglichst guten Wirkungsgrad zu sichern.

Die Erfindung löst diese Aufgabe durch den Gegenstand des Anspruchs 1.

Dadurch, dass der oder die Ableitströme derart geregelt werden, kann auf einfache Weise sichergestellt werden, dass vorgebbare Maximalwerte für Ableitströme nicht überschritten werden.

Die Erfindung eignet sich grundsätzlich für verschiedenste Wechselrichter, bei welchen auf der Eingangsseite Ableitströme, insbesondere kapazitive Ableitströme gegen das Erdpotential auftreten. Insbesondere sind dies transformatorlose Wechselrichter unterschiedlichster Topologie sowie Topologien, bei denen der Neutralleiter (N-Potential) des Netzes nicht angeschlossen ist. Bevorzugt eignet sich das Verfahren dabei für dreiphasige Wechselrichter, die sowohl eine Zweipunkt-Topologie (z.B. eine sogenannte B6-Brücke), als auch eine Mehrpunkt-Topologie, beispielsweise eine Dreipunkt-Topologie (z.B. eine NPC-Brücke: "Neutral Point Connected" oder eine BSNPC-Brücke "Bipolar Switch Neutral Point Connected") aufweisen können.

Dabei wird das Verfahren zur Betriebsführung eines transformatorlosen Wechselrichters eingesetzt, insbesondere bei einem Wechselrichter, der keine galvanische Verbindung zu bzw. mit einem N- und/oder PE- Potential des Energieversorgungsnetzes aufweist.

Die Erfindung ermöglicht insbesondere auch einen hinsichtlich des Wirkungsgrades optimierten Betrieb des Wechselrichters trotz des Auftretens eingangsseitiger kapazitiver Ableitströme.

Bei der Betriebsführung des Wechselrichters zur Ansteuerung einer Leistungsbaugruppe des Wechselrichters, die Leistungshalbleiter aufweist, wird ein PWM-Verfahren eingesetzt und die eigentliche Betriebsführung erfolgt mit einer Regeleinrichtung. Geeignet ist das Verfahren dabei für Pulsweitenmodulationsarten, bei denen eine modifizierte Sinus-Dreieck-Modulation, mit zeitvariantem Offset, zur Erzeugung des PWM-Signals angewandt wird. Dabei ist die Amplitude des Offsets nicht konstant ist, sondern immer nur so groß gewählt, wie es zur Vermeidung von Übermodulation des erzeugten PWM-Signals notwendig ist. Für Werte der Zwischenkreisspannung bei oder oberhalb der zweifachen Scheitelspannung des Netzspannungssignals ergibt sich dadurch ein Offset mit der Amplitude Null und somit konventionelle Sinus-Dreieck-Modulation.

Da die Zwischenkreisspannung bei dem erfindungsgemäßen Verfahren den Ableitstrom beeinflusst, kann hierdurch wiederum auf einfache Weise eine Regelung des Ableitstromes realisiert werden. Der Ableitstrom $I_A$ wird also durch eine Änderung einer Sollwertvorgabe für die Zwischenkreisspannung $U_{ZwK\,SOLL}$ am Eingang der Wechselrichterbrücke geregelt. So kann die Regelung beispielsweise immer dann erfolgen, wenn die Zwischenkreisspannung $U_{ZwK}$ einen Spannungswert aufweist, der größer als ein vorbestimmbarer erster Spannungsgrenzwert ($U_1$) ist, und wenn die Zwischenkreisspannung $U_{ZwK}$ einen Spannungswert aufweist, der kleiner als ein vorbestimmbarer zweiter Spannungsgrenzwert ($U_2$) ist.

Vorzugsweise erfolgt die Regelung des Ableitstromes $I_A$ dann, wenn sich der Wechselrichter in einem Betriebszustand befindet, in dem wenigstens eine bestimmte Bedingung erfüllt ist.

Diese Bedingung kann nach einer besonders vorteilhaften Variante darin bestehen, dass der Wechselrichter in einem Bereich betrieben wird, in dem der Offset bei dem Modulationsverfahren einen Wert ungleich Null hat. Dies ist besonders vorteilhaft, da bei bestimmten Wechselrichtertopologien die zu regelnden Ableitströme nur auftreten, wenn der Wechselrichter in diesem Bereich betrieben wird. Dieser Bereich ist nach oben durch einen Zwischenkreisspannungswert $U_2$ begrenzt, der der zweifachen Scheitelspannung des Netzspannungssignals entspricht, und nach unten durch einen minimalen Zwischenkreisspannungswert $U_1$, bis zu welchem mit dem jeweiligen Verfahren der Sinus-Dreieck-Modulation mit zeitvariantem Offset ein Betrieb ohne Stromverzerrung in dem wechselrichterausgangsseitigen Signal möglich ist.

Die Bedingung kann auch darin bestehen, dass der Ableitstrom $I_A$ einen Stromwert aufweist, der größer als ein vorbestimmbarer erster Grenzstromwert ist, wobei der Ableitstrom $I_A$ dann auf einen Stromwert geregelt wird, der kleiner oder gleich einem zweiten vorbestimmbaren Grenzstromwert ist.

Es ist zweckmäßig, wenn für den ersten Grenzstromwert gilt: $I_A$= 0 und für den zweiten Grenzstromwert gilt: $I_A = I_{MAX}$, wobei $I_{MAX}$ ein Stromwert ist, über dem der Wechselrichter durch seine Fehlerstromschutzeinrichtung in einen Sicherheitszustand versetzt wird.

Es ist vorteilhaft, wenn die Regelung des Ableitstromes so langsam ist, dass sie nicht auf schnell auftretende Fehlerströme, die eine Auslösung der Fehlerstromschutzeinrichtung bewirken sollen, anspricht, aber gleichzeitig auch so schnell ist, dass auftretende Ableitströme geregelt werden, bevor die Fehlerstromschutzeinrichtung auf diese anspricht.

Es ist ferner vorteilhaft, wenn der Wechselrichter einen eingangsseitigen DC/DC-Wandler (vorzugsweise einen Hochsetzsteller oder einen Tiefsetzsteller oder einen kombinierten Hochsetz-/Tiefsetzsteller) aufweist, so dass bei der Betriebsführung neben der Regelung des Ableitstromes auch ein Maximum-Power-Point-Tracking zur Maximierung einer von den photovoltaischen Elementen abgegebenen Leistung durchgeführt werden kann, ohne dass sich diese beiden Regelungen gegenseitig nachteilig beeinflussen.

Weitere vorteilhafte Ausgestaltungen der Erfindung sind in den übrigen Unteransprüchen angegeben.

Nachfolgend wird die Erfindung anhand von Ausführungsbeispielen unter Bezug auf die Zeichnungen näher beschrieben. Es zeigt:

Fig. 1        ein Prinzipschaltbild einer Anlage mit einem zwischen einen PV-Generator und ein Netz geschalteten Wechselrichter;

Fig. 2 ein Prinzipschaltbild einer zu Fig. 1 analogen Anlage mit einem Wechselrichter, der eine Dreipunkt-Topologie aufweist;

Fig. 3a, b Diagramme zur Veranschaulichung des zeitlichen Verlaufs des Zwischenkreispotentials und der ausgangsseitigen Wechselspannung gegenüber M* sowie gegenüber PE bei einer Ansteuerung des Wechselrichters durch Sinus-Dreieck-Modulation mit dreieckförmigem Offset;

Fig. 3c, d Diagramme zur Veranschaulichung des zeitlichen Verlaufs des Zwischenkreispotentials und der ausgangsseitigen Wechselspannung gegenüber M* sowie gegenüber PE bei einer Ansteuerung des Wechselrichters durch Sinus-Dreieck-Modulation mit sinusförmigem Offset;

Fig. 4 ein Diagramm, welches den Verlauf des Ableitstroms (effektiv) gegenüber der Zwischenkreisspannung zeigt;

Fig. 5, 7 Flussdiagramme zur Veranschaulichung von zwei möglichen Ausführungsformen des Verfahrens zur Regelung des Ableitstromes;

Fig. 6 eine U/I-Kennlinie für eine Regelung des Ableitstroms;

Fig. 8 ein Prinzipschaltbild einer zu Fig. 1 analogen Anlage mit einem Wechselrichter, der eine Dreipunkt-Topologie und einen eingangsseitigen DC/DC-Wandler aufweist.

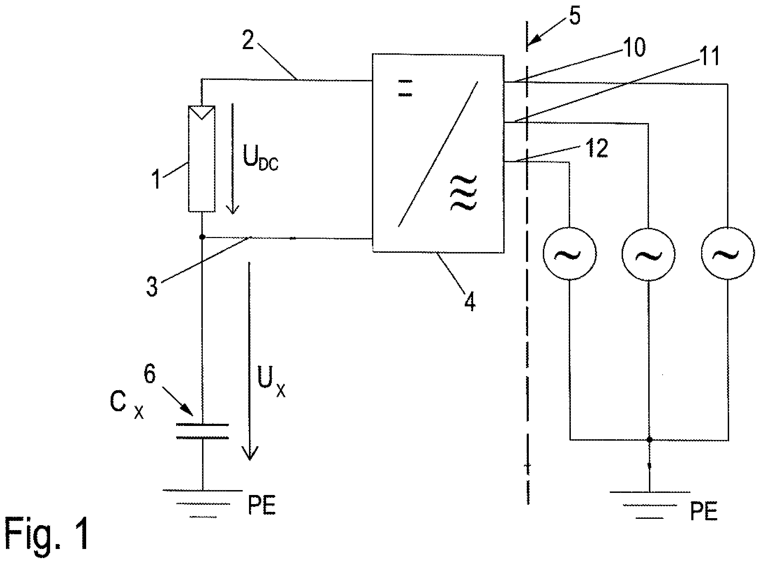

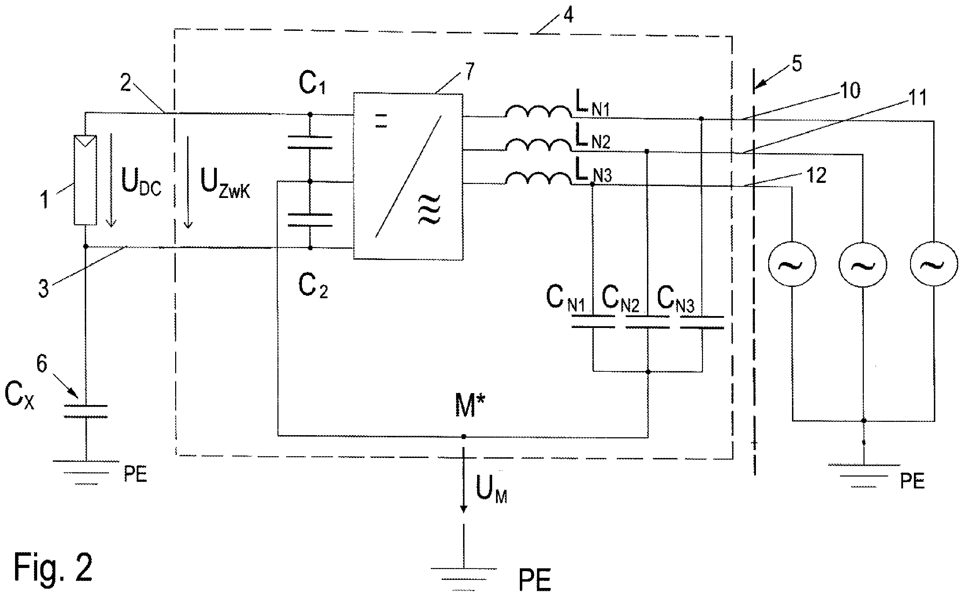

Nachfolgend werden anhand der Fig. 1 und 2 zunächst der Aufbau einer PV-Anlage sowie eine beispielhafte, stark vereinfacht dargestellte transformatorlose Wechselrichtertopologie beschrieben.

In einer elektrischen Anlage nach Art der Fig. 1 erzeugt ein Photovoltaik-Generator (PV-Generator) 1, bestehend aus wenigstens einem photovoltaischen Element, eine Gleichspannung, die über elektrische Leitungen 2 und 3 den Gleichspannungseingängen eines Wechselrichters 4 zugeführt wird. Die dem Wechselrichter zugeführte Gleichspannung wird von diesem in eine Wechselspannung umgewandelt und an Ausgängen 10, 11, 12 in ein Energieversorgungsnetz (dargestellt durch die Komponenten rechts der Linie 5) eingespeist.

Eine Kapazität $C_X$ 6 stellt die sogenannte äquivalente Ableitkapazität, d. h. die Summe aller Ableitkapazitäten dar, über die ggf. Ableitströme fließen. Die Wechselspannungsanteile einer Spannung $U_X$ zwischen einem Erdpotential (PE) und der elektrischen Leitung 3 verursachen die über die Kapazität $C_X$ 6 fließenden Ableitströme. Die Spannung stellt somit ein Maß für den fließenden Ableitstrom $I_A$ dar. Alternativ/ergänzend kann auch die Spannung zwischen dem elektrischen Leiter 2 und dem Erdpotential (PE) als Maß für einen Ableitstrom dienen.

Der Wechselrichter 4 weist hier nicht im Detail dargestellte Baugruppen auf, wie eine Leistungsbaugruppe mit Leistungshalbleitern und eine Regeleinrichtung (mit einer Ansteuerbaugruppe), sowie ggf. weitere Baugruppen wie Filter, ein Benutzerinterface, diverse Schnittstellen, Meßeinrichtungen usw..

Fig. 2 zeigt eine PV-Anlage mit einem Wechselrichter in "Dreipunkt-Topologie". Ein Ausführungsbeispiel eines solchen Wechselrichters wird beispielsweise detaillierter in der EP 2 107 672 A2 beschrieben.

Die zusätzlich gezeigten Kapazitäten $C_1$ und $C_2$ dienen der Teilung der vom PV-Generator erzeugten Gleichspannung und zur Bildung von drei Spannungsniveaus.

Ferner zeigt Fig. 2 ein Netzfilter mit den Bauteilen $L_{N1}$, $L_{N2}$, $L_{N3}$, $C_{N1}$, $C_{N2}$, und $C_{N3}$, dessen Fußpunkt mit der Verbindung der beiden Kapazitäten $C_1$, $C_2$ und dem Mittelpunktspannungseingang des Wechselrichters verbunden ist. Diese Verbindung ist mit dem Schaltungspunkt M* bezeichnet. Die sich zwischen dem Schaltungspunkt M* und dem Erdpotential (PE) ausbildende Spannung $U_M$ stellt ein Maß für den Ableitstrom $I_A$ dar. Der (in der Fig. 2 nicht dargestellte) N-Leiter des Wechselspannungsnetzes kann an den Wechselrichter angeschlossen sein, um als Bezugspotential für Messzwecke, insbesondere auch als Referenz für die Fehlerstromschutzeinrichtung genutzt zu werden. Er ist aber nicht mit den eigentlichen zur Spannungswandlung dienenden Baugruppen des Wechselrichters leitend verbunden, sodass das Potential von M* gegenüber PE / N frei ist.

Die Wechselrichterbrücke 7 enthält die aus leistungselektronischen Schaltern bestehende Brückenschaltung (beispielsweise eine NPC-Brücke oder eine BSNPC-Brücke) zur Umwandlung von eingangsseitigem Gleichstrom in ausgangsseitigen Wechselstrom.

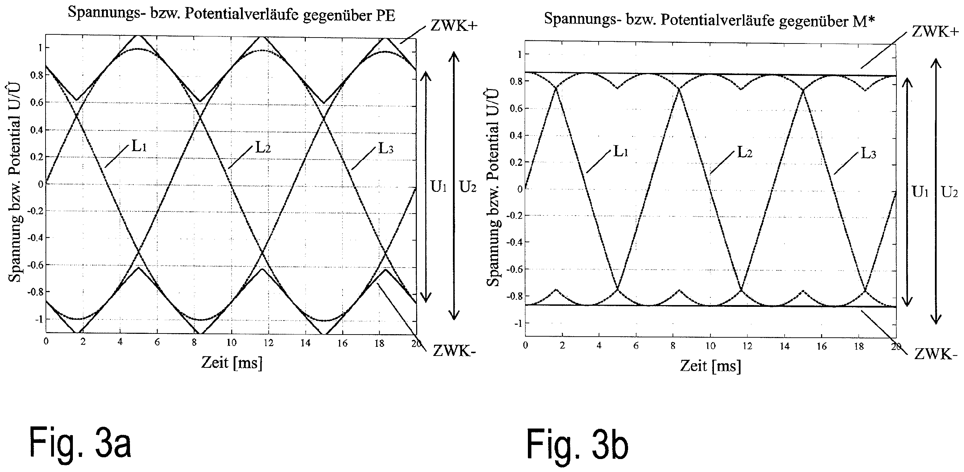

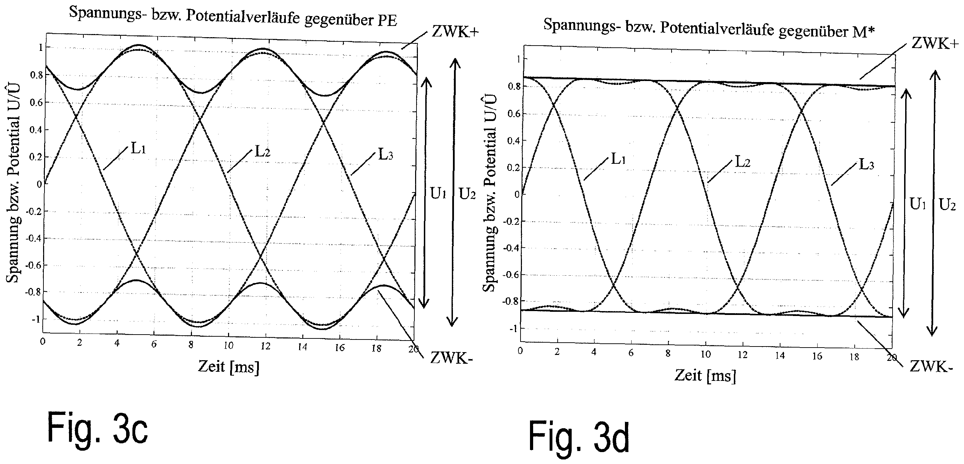

Die Ansteuerung/Regelung des Wechselrichters erfolgt mittels Pulsweitenmodulation, welche bevorzugt mittels Sinus-Dreieck-Modulation mit zeitvariantem Offset erzeugt wird. In Fig. 3a und b ist beispielsweise der Fall einer Sinus-Dreieck-Modulation mit dreieckförmigem Offset dargestellt, der auch als "Raumzeiger-Modulation" bekannt ist, Fig. 3c und d zeigen den Fall einer Sinus-Dreieck-Modulation mit sinusförmigem Offset, der auch als "Sinus-Dreieck-Modulation mit dritter Harmonischer" bekannt ist. Darüber hinaus sind auch andere Formen modifizierter Sinus-Dreieck-Modulation, insbesondere mit anderen Formen des Offsets möglich, die es erlauben ein Gleichspannungssignal mit einem Wert kleiner als die zweifache Scheitelspannung des Netzspannungssignals in ein wechselrichterausgangsseitiges Signal umzuwandeln, das keine Stromverzerrungen aufweist. Vorteilhaft ist es, wenn die Amplitude des Offsets nicht konstant ist, sondern immer nur so groß gewählt wird, wie es bei gegebener Zwischenkreisspannung notwendig ist, um keine Stromverzerrungen zu erhalten.

In Fig. 3 sind jeweils die überlagerten drei Netzspannungsphasenverläufe $L_1$, $L_2$ und $L_3$ sowie die Verläufe von positivem (ZwK+) und negativem (ZwK-) Zwischenkreispotential gegenüber dem Potential M* (Fig. 3b und 3d) und gegenüber dem Erdpotential PE (Fig. 3a und 3c) dargestellt. Dabei ist zu erkennen, dass das positive und negative Potential des Zwischenkreises die drei Netzspannungsverläufe stets einhüllen.

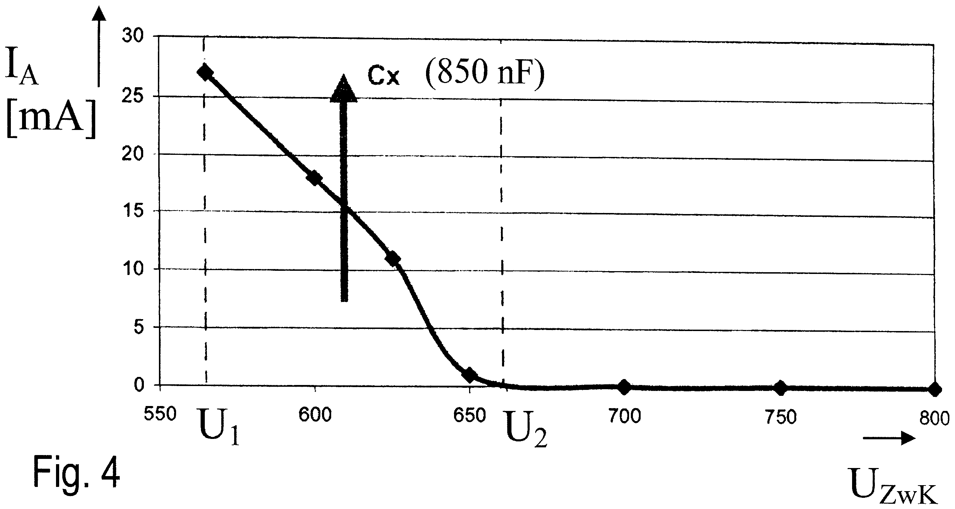

Wird der Wechselrichter in Sinus-Dreieck-Modulation mit zeitvariantem Offset betrieben, kann daher die Zwischenkreisspannung $U_{ZwK}$ = (ZwK+) - (ZwK-) unter den in Fig. 3a, b und 3c, d dargestellten Wert $U_2$ (d.h. den zweifachen Wert der Scheitelspannung Ü des Netzspannungssignals) sinken. In diesem Fall treten allerdings eingangsseitig Potentialschwankungen mit dreifacher Netzfrequenz gegenüber dem Erdpotential PE auf, die Ableitströme verursachen (siehe Fig. 4).

Grundsätzlich kann zwar bei Sinus-Dreieck-Modulation mit zeitvariantem Offset die Zwischenkreisspannung kleiner als der zweifache Wert der Scheitelspannung Ü des Netzspannungssignals, sein, jedoch nur so klein, dass der Zwischenkreispotentialverlauf die Netzspannungsverläufe stets einhüllt, d. h. nicht kleiner als der Wert $U_1$, wie er in Fig. 3a zu erkennen ist. Somit gilt für einen Betrieb in dem Bereich, bei dem die Modulation mit Offset erfolgt:

$$U_1 < U_{ZwK} < U_2.$$

Fig. 4 zeigt beispielhaft die Abhängigkeit eines Ableitstromes $I_A$ von der Zwischenkreisspannung $U_{ZwK}$ (vgl. die Spannung zwischen den Leitern 2 und 3 in Fig. 2) bei einer Ableitkapazität von $C_X$ = 850 nF. Der nach oben weisende Pfeil verdeutlicht die Zunahme des Ableitstroms $I_A$ mit zunehmender Ableitkapazität $C_X$.

Im Betrieb eines Wechselrichters der genannten Art bestehen für den Ableitstrom $I_A$ Grenzwerte. So darf der Ableitstrom nicht über einen Maximalwert $I_{MAX}$ ansteigen, über dem durch die Fehlerstromschutzeinrichtung eine Trennung vom Netz erfolgt. Andererseits erfordert die Maßgabe, Wechselrichter mit einem möglichst hohen Wirkungsgrad zu betreiben, die Reduzierung der Zwischenkreisspannung $U_{ZwK}$ unter den Wert $U_2$, was wiederum einen Ableitstrom $I_A$ zur Folge hat (vgl. Fig. 4).

Bislang wurde vorgeschlagen, die zulässigen Ableitkapazitäten auf einen Maximalwert zu begrenzen, so dass auftretende Ableitströme einen bestimmten Wert nicht überschreiten. Dies hat jedoch zur Folge, dass bestimmte photovoltaische Elemente mit zu hohen Ableitkapazitäten nicht in Verbindung mit bestimmten Wechselrichtertopologien verwendet werden können. Weiterhin wurde vorgeschlagen, den Betrieb mit Zwischenkreisspannungen unterhalb der zweifachen Scheitelspannung des Netzspannungsignals beim Auftreten von zu hohen Ableitströmen zu deaktivieren, was jedoch zu einer - ggf. auch zeitweisen - Reduzierung des Wirkungsgrades führt. Beides ist nachteilig.

Auch sind die Ableitkapazitäten zeitlich nicht konstant, sondern können z.B. infolge von Betauung, Luftfeuchte oder anderen Einflüssen schwanken. Daher mussten PV-Anlagen bisher stets von ungünstigsten Bedingungen ausgehend dimensioniert werden, um häufiges Abschalten infolge zu hoher Ableitströme zu vermeiden.

Um unter Berücksichtigung der geschilderten Begrenzungen eine möglichst optimale Betriebsführung des Wechselrichters zu erreichen, wird daher vorgeschlagen, den Ableitstrom $I_A$ zu regeln und zwar derart, dass der Ableitstrom $I_A$ einen Maximalwert $I_{MAX}$ nicht überschreitet und dennoch ein Betrieb mit einem möglichst hohen Wirkungsgrad erreicht wird, indem die Zwischenkreisspannung durch Verwendung einer geeigneten Modulation, beispielsweise Sinus-Dreieck-Modulation mit zeitvariantem Offset, und kontinuierliches Ausregeln möglichst niedrig gehalten wird, wobei der Ableitstrom als Regelgütekriterium fungiert.

Hierzu wird beispielsweise die Zwischenkreisspannung $U_{ZwK}$ durch eine Änderung der Sollwertvorgabe $U_{ZwK\ SOLL}$ für die Zwischenkreisspannungsregelung reduziert, solange der Ableitstrom $I_A$ einen bestimmten Maximalwert $I_{MAX}$ nicht überschreitet.

Droht der Ableitstrom $I_A$ den Maximalwert $I_{MAX}$ zu überschreiten, wird die Zwischenkreisspannung $U_{ZwK}$ durch die Erhöhung der Sollwertevorgabe $U_{ZwK\ SOLL}$ erhöht, was zu einer Absenkung des Ableitstromes $I_A$ führt. Dabei wird das PWM-Signal durch das verwendete Modulationsverfahren immer derart angepasst, dass bei der jeweiligen Zwischenkreisspannung am Eingang des Wechselrichters keine Stromverzerrungen im wechselrichterausgangsseitigen Signal auftreten.

Fig. 4 zeigt weiterhin zwei Spannungswerte $U_1$ und $U_2$ für die Zwischenkreisspannung $U_{ZwK}$. $U_1$ bezeichnet den Wert der Zwischenkreisspannung $U_{ZwK}$ der beispielsweise bei Sinus-Dreieck-Modulation mit zeitvariantem Offset mindestens erforderlich ist, um die einzuspeisenden Netzspannungsamplituden zu erzeugen. $U_2$ bezeichnet den Wert der Zwischenkreisspannung, unterhalb dem der Wechselrichter bei konventioneller Sinus-Dreieck-Modulation in Übermodulation (Modulationsindex M>1) betrieben würde.

Die Werte $U_1$ und $U_2$ sind modulationsformabhängig bzw. auch netzspannungsabhängig und werden von einer zentralen Steuerungseinheit ermittelt bzw. durch diese festgelegt.

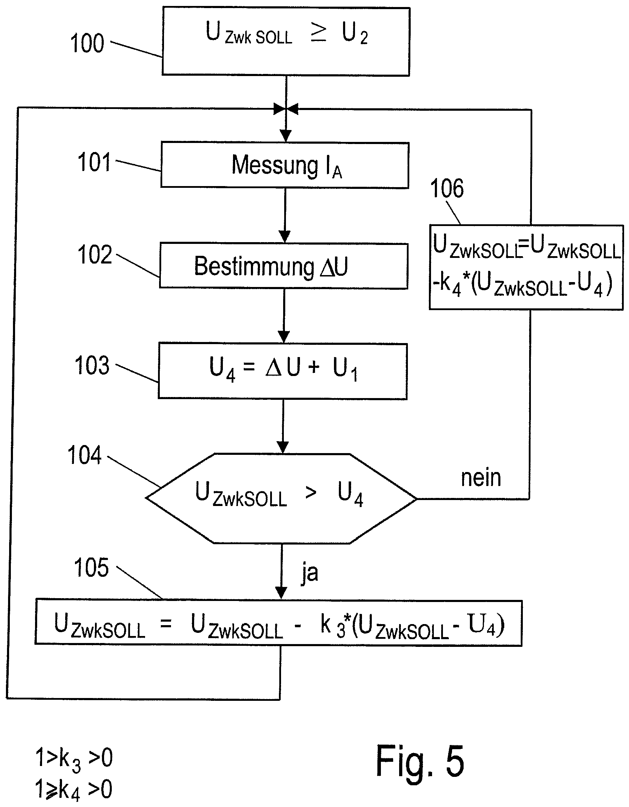

Im Folgenden wird der in Fig. 5 gezeigte beispielhafte Ablaufplan beschrieben.

Zunächst wird im Schritt 100 die Sollwertvorgabe für die Zwischenkreisspannung $U_{ZwK\ SOLL}$ auf einen Startwert oberhalb von oder gleich $U_2$ gesetzt.

In Schritt 101 wird der aktuelle Wert des Ableitstromes $I_A$ gemessen.

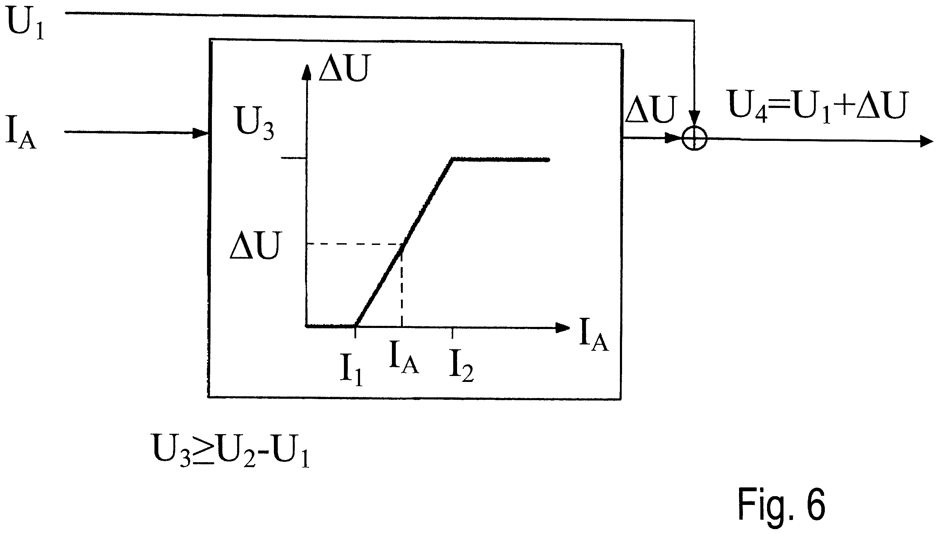

Mit dem Messwert $I_A$ wird in Schritt 102 unter Verwendung der in Fig. 6 beispielhaft und schematisch gezeigten Kennlinie $\Delta U = f(I_A)$ eine Spannungsdifferenz $\Delta U$ ermittelt. Die Spannungsdifferenz $\Delta U$ fällt umso größer aus, je größer der Betrag des gemessenen Ableitstromes $I_A$ ist. Die Steilheit der in Fig. 6 gezeigten Kennlinie gibt hierbei vor, um welchen Betrag $\Delta U$ geändert wird, wenn sich der gemessene Ableitstrom $I_A$ um einen bestimmten Betrag ändert (gilt für: $I_1 < I_A < I_2$, vgl. Fig. 6).

In Schritt 103 wird aus dem durch das Modulationsverfahren vorgegebenen unteren Grenzwert $U_1$ durch Hinzuaddieren der bereits ermittelten Spannungsdifferenz $\Delta U$ ein neuer unterer Grenzwert $U_4$ gebildet. Durch die in der Kennlinie gemäß Fig. 6 gegebene obere Grenze $U_3$ für die Spannungsdifferenz $\Delta U$ wird dabei durch den Zusammenhang $U_3 \geq U_2$-$U_1$ sichergestellt, dass der neue untere Grenzwert $U_4$ nach Erreichen oder Überschreiten des oberen Spannungsgrenzwertes $U_2$ nicht weiter erhöht wird, da über $U_2$ gemäß Fig. 4 keine Spannungsabhängigkeit des Ableitstroms $I_A$ von der Zwischenkreisspannung $U_{ZwK}$ mehr vorliegt und somit eine Steigerung der Zwischenkreisspannung $U_{ZwK}$ keine weitere Verringerung des Ableitstromes $I_A$ bewirken kann. Eine solche Situation kann beispielsweise auftreten, wenn ein Grundableitstrom vorliegt, der größer als der Stromwert $I_2$ ist. Unterhalb des Stromwertes $I_1$ wird, wie in Verbindung mit Fig. 6 ersichtlich, $U_1$ als untere Grenze beibehalten, d.h. $U_4 = U_1$, da $\Delta U = 0$.

Mittels der in Schritt 104 dargestellten Überprüfung wird ermittelt, ob die aktuelle Sollwertvorgabe für die Zwischenkreisspannung $U_{ZwK\ SOLL}$ größer als der untere Spannungsgrenzwert $U_4$ ist. Trifft dies zu ("ja-Verzweigung"), so wird die aktuelle Sollwertvorgabe für die Zwischenkreisspannung $U_{ZwK\ SOLL}$ entsprechend der in Schritt 105 angegebenen, beispielhaften Berechnungsvorschrift verringert. Die Dynamik und der Betrag dieser Anpassung werden hierbei von einem Regelparameter $k_3$, der für diese Berechnungsvorschrift vorteilhafterweise kleiner als eins und größer als null ist, beeinflusst. Anschließend wird eine erneute Messung des Ableitstromes $I_A$ und eine erneute Anpassung des unteren Spannungsgrenzwertes $U_4$ beginnend mit Schritt 101 durchgeführt.

Wird die Abfragebedingung in Schritt 104 nicht erfüllt ("nein-Verzweigung"), d.h., wenn die aktuelle Sollwertvorgabe für die Zwischenkreisspannung $U_{ZwK\ SOLL}$ unterhalb des unteren Spannungsgrenzwertes $U_4$ oder darauf liegt, so wird die Sollwertvorgabe für die Zwischenkreisspannung $U_{ZwK\ SOLL}$ entsprechend der in Schritt 106 angegebenen, beispielhaften Berechnungsvorschrift erhöht. Die Dynamik und der Betrag dieser Anpassung werden hierbei von einem Regelparameter $k_4$ beeinflusst, der für diese Berechnungsvorschrift vorteilhafterweise kleiner oder gleich eins und größer als null ist. Anschließend wird durch ein Durchlaufen der Schleife beginnend mit Schritt 101 der Ableitstrom $I_A$ erneut gemessen und der untere Spannungsgrenzwert $U_4$ erneut angepasst.

An Stelle der beispielhaften Berechnungsvorschriften 105 bzw. 106 können auch beliebige andere, im Bereich der Regelungstechnik geeignete Filterfunktionen Anwendung finden. Auch für die Kennlinie $\Delta U = f(I_A)$ sind andere Ausführungen als in Fig. 6 gegeben möglich.

Ferner müssen die Regelparameter $k_3$ und $k_4$ nicht konstant sein, sondern können beispielsweise während des Betriebs adaptiv geändert werden.

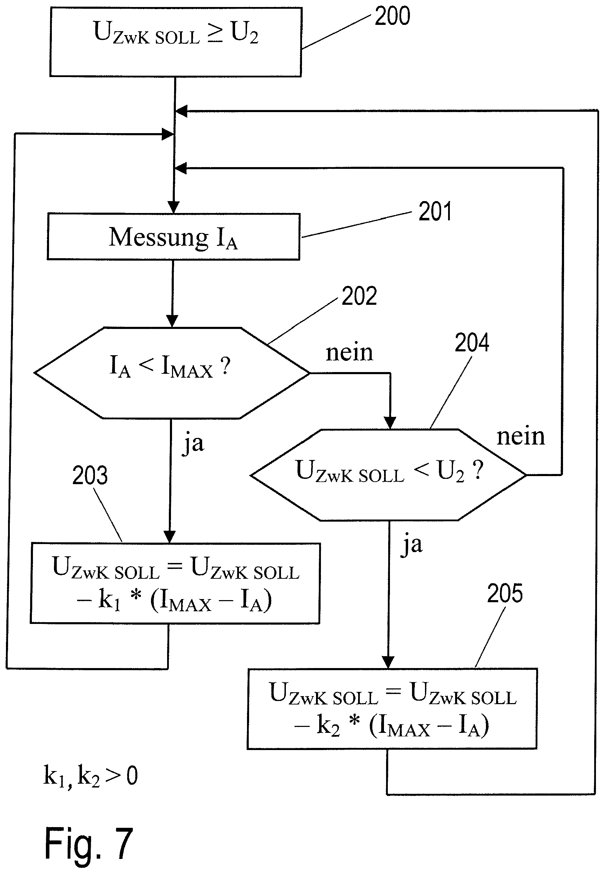

Fig. 7 zeigt beispielhaft eine weitere Möglichkeit zur Ausführung des erfindungsgemäßen Verfahrens ohne die in Fig. 6 gezeigte Kennlinie.

Zunächst wird in Schritt 200 die Sollwertvorgabe für die Zwischenkreisspannung $U_{ZwK\ SOLL}$ auf einen Startwert oberhalb von oder gleich $U_2$ gesetzt.

In Schritt 201 wird der aktuelle Wert des Ableitstromes $I_A$ gemessen.

Liegt der gemessene Wert von $I_A$ unterhalb des Grenzwertes $I_{MAX}$, so wird in der Verzweigung 202 nach Schritt 203 verzweigt ("ja-Verzweigung") und die Sollwertvorgabe für die Zwischenkreisspannung $U_{ZwK\ SOLL}$ wird entsprechend der beispielhaften Berechnungsvorschrift in Schritt 203 verringert. Die Dynamik und der Betrag dieser Anpassung werden hierbei von einem Regelparameter $k_1$ beeinflusst, der für diese Berechnungsvorschrift vorteilhafterweise größer als null ist. Anschließend wird beginnend mit Schritt 201 der Ableitstrom $I_A$ erneut gemessen und auf Überschreitung von $I_{MAX}$ geprüft.

Ist die Bedingung in der Verzweigung 202 nicht erfüllt ("nein-Verzweigung"), d.h. wenn der Ableitstrom $I_A$ den Wert $I_{MAX}$ erreicht oder überschritten hat, so wird die Sollwertvorgabe für die Zwischenkreisspannung $U_{ZwK\ SOLL}$ mittels der in Schritt 205 angegebenen, beispielhaften Berechnungsvorschrift erhöht. Die Dynamik und der Betrag dieser Anpassung werden hierbei von einem Regelparameter $k_2$ beeinflusst, der für diese Berechnungsvorschrift vorteilhafterweise größer als null ist. Anschließend wird durch ein Durchlaufen der Schleife beginnend mit Schritt 201 der Ableitstrom $I_A$ erneut gemessen und auf Überschreitung von $I_{MAX}$ geprüft.

In Schritt 204 wird zusätzlich überprüft, ob die aktuelle Sollwertvorgabe für die Zwischenkreisspannung $U_{ZwK\ SOLL}$ unterhalb des oberen Spannungsgrenzwertes $U_2$ liegt, und falls nicht, wird die Erhöhung der Sollwertvorgabe für die Zwischenkreisspannung $U_{ZwK\ SOLL}$ in Schritt 205 übersprungen. Dadurch wird verhindert, dass die Sollwertvorgabe für die Zwischenkreisspannung $U_{ZwK\ SOLL}$ über den Spannungsgrenzwert $U_2$ erhöht werden kann, über dem gemäß Fig. 4 keine Spannungsabhängigkeit des Ableitstroms $I_A$ von der Zwischenkreisspannung $U_{ZwK}$ mehr vorliegt und somit eine Steigerung der Zwischenkreisspannung $U_{ZwK}$ keine weitere Verringerung des Ableitstromes $I_A$ bewirken kann. Eine solche Situation kann beispielsweise auftreten, wenn ein Grundableitstrom vorliegt, der größer als $I_{MAX}$ ist.

An Stelle der beispielhaften Berechnungsvorschriften 203 bzw. 205 können auch beliebige andere, im Bereich der Regelungstechnik geeignete Filterfunktionen Anwendung finden. Auch müssen die Regelparameter $k_1$ und $k_2$ nicht konstant sein, sondern können beispielsweise während des Betriebs adaptiv geändert werden.

Gemäß den bisherigen Erläuterungen wird die Zwischenkreisspannung am Eingang der Wechselrichterbrücke durch das erfindungsgemäße Verfahren auf einen möglichst niedrigen, für den Betrieb im Hinblick auf den Wirkungsgrad optimalen Wert eingestellt. Die Erfindung ermöglicht es derart insbesondere, Wechselrichter zur Optimierung ihres Wirkungsgrades mit möglichst niedriger Zwischenkreisspannung am Eingang der Wechselrichterbrücke zu betreiben obwohl in einer derartigen Betriebsart Ableitströme auftreten können, indem diese Ableitströme durch einen Regelvorgang unterhalb eines nicht zu überschreitenden Maximalwertes gehalten werden.

In einer Anordnung nach Fig. 2 ist die Zwischenkreisspannung $U_{ZwK}$ am Eingang der Wechselrichterbrücke 7 gleichzeitig auch die am PV-Generator 1 anliegende Spannung $U_{DC}$. In diesem Zusammenhang ist bei Anwendung des erfindungsgemäßen Verfahrens zu berücksichtigen, dass bei PV-Anlagen üblicherweise eine weitere Anforderung an die Generatorspannung $U_{DC}$ vorliegt, die aus dem sogenannten "MPP-Tracking" resultiert. Solche Verfahren, die durch Einstellen einer bestimmten Generatorspannung dafür sorgen, dass der PV-Generator im Punkt maximaler Leistungsabgabe (Maximum-Power-Point, MPP) arbeitet, sind dem Fachmann bekannt und bedürfen daher hier im Detail keiner weiteren Erläuterung.

Falls nun die durch das MPP-Tracking geforderte Generatorspannung $U_{DC}$ höher ist als der durch das erfindungsgemäße Verfahren vorgegebene Sollwert für die Zwischenkreisspannung $U_{ZwK\ SOLL}$, dann wird bei dem erfindungsgemäßen Verfahren bevorzugt die durch das MPP-Tracking geforderte Generatorspannung eingestellt. Falls jedoch die durch das MPP-Tracking geforderte Generatorspannung $U_{DC}$ kleiner oder gleich dem durch das erfindungsgemäße Verfahren vorgegebenen Sollwert für die Zwischenkreisspannung $U_{ZwK\ SOLL}$ ist, dann wird im Hinblick auf den zu begrenzenden Ableitstrom $I_A$ der durch das erfindungsgemäße Verfahren vorgegebene Spannungswert $U_{ZwK\ SOLL}$ als Generatorspannung eingestellt. Dieser Wert ist dann üblicherweise nicht mehr identisch mit dem Spannungswert, bei dem der PV-Generator im Punkt maximaler Leistungsabgabe betrieben wird. Auch ist zu berücksichtigen, dass ein Betrieb der Anordnung gemäß Fig. 2 bei Generatorspannungen unterhalb von $U_1$ nicht mehr möglich ist.

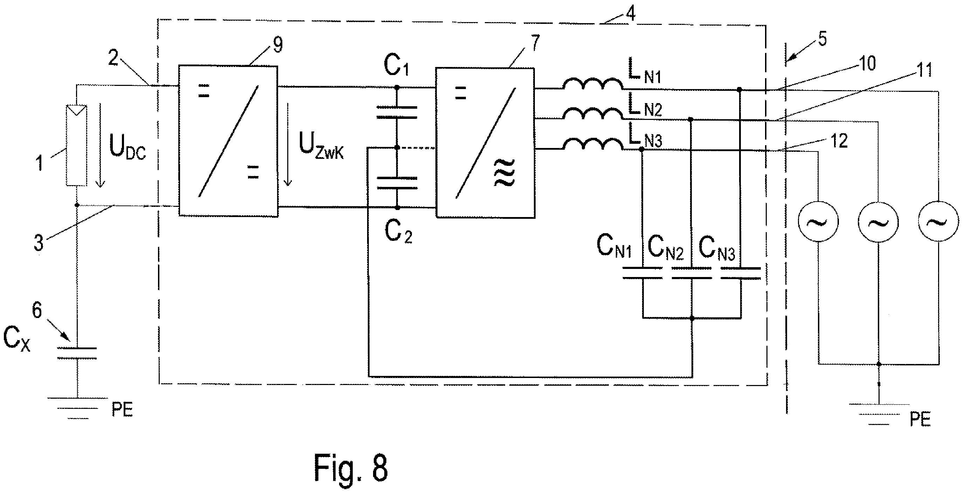

Um den Eingangsspannungsbereich eines Wechselrichters 4 zu erweitern, ist es bekannt, der Wechselrichterbrücke 7 einen zusätzlichen DC/DC-Wandler vorzuschalten. Fig. 8 zeigt beispielsweise eine schematische Darstellung einer solchen Anlage gemäß Fig. 1, die gegenüber der Ausführung in Fig. 2 um einen DC/DC-Wandler 9 im Gleichspannungspfad des PV-Generators ergänzt ist. Der DC/DC-Wandler 9 kann als Hochsetz- oder Tiefsetzsteller oder auch als kombinierter Hochsetz-/Tiefsetzsteller ausgeführt sein. Bei Verwendung bestimmter DC/DC-Wandler 9, insbesondere solcher, die keine galvanische Trennung zwischen Eingang und Ausgang aufweisen, treten Ableitströme in einer Anordnung gemäß Fig. 8 in gleicher Weise auf wie in einer Anordnung gemäß Fig. 2, womit das erfindungsgemäße Verfahren auch in einer Anordnung gemäß Fig. 8 seine Anwendung findet.

Bei Verwendung beispielsweise eines Hochsetzstellers als DC/DC-Wandler 9 in einer Anordnung gemäß Fig. 8 ist ein Betrieb der Anlage im Gegensatz zu einer Anordnung gemäß Fig. 2 auch bei Generatorspannungen $U_{DC}$ möglich, die bei Verwendung konventioneller Sinus-Dreieck-Modulation unterhalb von $U_2$ und bei Verwendung von modifizierter Sinus-Dreieck-Modulation, beispielsweise Sinus-Dreieck-Modulation mit zeitvariantem Offset, unterhalb von $U_1$ liegen können. In Verbindung mit dem erfindungsgemäßen Verfahren erweist sich die Anordnung gemäß Fig. 8 darüber hinaus als besonders vorteilhaft, da nun, in dem Fall, dass die durch das MPP-Tracking geforderte Generatorspannung $U_{DC}$ kleiner oder gleich dem durch das erfindungsgemäße Verfahren vorgegebenen Sollwert für die Zwischenkreisspannung $U_{ZwK\ SOLL}$ ist, beide Spannungswerte unabhängig voneinander auf ihr Optimum eingestellt werden können. Derart ist es möglich, eine Regelung des Ableitstromes gemeinsam mit einem Maximum-Power-Point-Tracking durchzuführen, ohne dass sich diese zwei Regelungsverfahren nachteilig beeinflussen. In dem Fall, dass die durch das MPP-Tracking geforderte Generatorspannung $U_{DC}$ höher ist als der durch das erfindungsgemäße Verfahren vorgegebene Sollwert für die Zwischenkreisspannung $U_{ZwK\ SOLL}$, wird bei dem erfindungsgemäßen Verfahren in einer Anordnung gemäß Fig. 8 mit Hochsetzsteller als DC/DC-Wandler auch wieder bevorzugt die durch das MPP-Tracking geforderte Generatorspannung eingestellt.

Übersicht über die verwendeten Formel- und Bezugszeichen

| | |
|---|---|
| 1 | PV-Generator |
| 2,3 | Leitungen |
| 4 | Wechselrichter |
| 5 | Linie |
| 6 | Kapazität $C_x$ |
| 7 | Wechselrichterbrücke |
| 9 | DC/DC-Wandler |
| 10, 11, 12 | Ausgänge |

| Symbol | Einheit | Bedeutung |
|---|---|---|
| $\Delta U$ | [V] | Erhöhung für den Spannungsgrenzwert $U_1$ |
| $C_1, C_2$ | [nF] | Spannungsteilerkapazitäten |
| $C_{N1}, C_{N2}, C_{N3}$ | [nF] | Netzfilterkapazitäten |
| $C_X$ | [nF] | Äquivalente Ableitkapazität |
| $I_1$ | [mA] | Ableitstromgrenzwert ab dem eine Erhöhung des unteren Grenzwerts der Zwischenkreisspannung erfolgt |
| $I_2$ | [mA] | Ableitstromgrenzwert bis zu dem eine Erhöhung des unteren Grenzwerts der Zwischenkreisspannung erfolgt |
| $I_A$ | [mA] | Ableitstrom |
| $I_{MAX}$ | [mA] | Maximal zulässiger Ableitstrom |
| $k_1$ | | Regelparameter |
| $k_2$ | | Regelparameter |
| $k_3$ | | Regelparameter |
| $k_4$ | | Regelparameter |
| $L_{N1}, L_{N2}, L_{N3}$ | [mH] | Netzfilterinduktivitäten |
| $M$ | [-] | Modulationsindex |
| $M^*$ | | Schaltungspunkt |
| $PE$ | | Erdpotential |
| $\ddot{U}$ | [V] | Scheitelwert des Netzspannungssignals |
| $U_1$ | [V] | Unterer Grenzwert der Zwischenkreisspannung $U_{ZwK}$, unterhalb dessen die Generierung der Netzspannungsverläufe nicht mehr möglich ist |
| $U_2$ | [V] | Grenzwert der Zwischenkreisspannung $U_{ZwK}$, unterhalb dessen der Wechselrichter in Sinus-Dreieck-Modulation mit zeitvariantem Offset betrieben wird |
| $U_3$ | [V] | Maximalwert für die Erhöhung $\Delta U$ |
| $U_4$ | [V] | Unterer Grenzwert der Zwischenkreisspannung $U_{ZwK}$, der durch Erhöhung von $U_1$ um $\Delta U$ entsteht |
| $U_{DC}$ | [V] | Spannung am PV-Generator |
| $U_M$ | [V] | Spannung zwischen $M^*$ und PE |
| $U_X$ | [V] | Spannung zwischen PE und der Leitung 3 |
| $U_{ZwK}$ | [V] | Zwischenkreisspannung |
| $U_{ZwK\,SOLL}$ | [V] | Sollwertvorgabe für die Zwischenkreisspannung |
| $ZwK\,-$ | | Negatives Zwischenkreispotential |
| $ZwK\,+$ | | Positives Zwischenkreispotential |

**Patentansprüche**

1. Verfahren zur Betriebsführung eines zur DC/AC-Spannungswandlung ausgelegten transformatorlosen Wechselrichters (4), der wenigstens einen Gleichspannungseingang aufweist sowie einen Zwischenkreis und der über wenigstens einen Wechselspannungsausgang (10, 11, 12) mit einem Energieversorgungsnetz verbindbar ist, mit dem er in einer Leistungsfluss-Wechselwirkung steht, derart, dass im Betrieb des Wechselrichters ein Ableitstrom $I_A$ auftreten kann, wobei der oder die Gleichspannungseingänge des Wechselrichters (4) keine galvanische Verbindung zu bzw. mit einem N- und/oder PE- Potential des Energieversorgungsnetzes aufweisen,

   a) wobei die Betriebsführung mit einer Regeleinrichtung erfolgt,
   b) wobei bei der Betriebsführung des Wechselrichters (4) zur Ansteuerung einer Leistungsbaugruppe des Wechselrichters, die Leistungshalbleiter aufweist, ein Pulsweiten-Modulationsverfahren mit einem Pulsweitenmodulationssignal eingesetzt wird,

   **dadurch gekennzeichnet, dass**

   c) das Pulsweitenmodulationssignal des Wechselrichters durch eine modifizierte Sinus-Dreieck-Modulation mit zeitvariantem Offset erzeugt wird, wobei die Amplitude des Offsets immer nur so groß gewählt wird, wie es zur Vermeidung von Übermodulation des erzeugten Pulsweitenmodulationssignals notwendig ist, und
d) der Ableitstrom $I_A$ durch eine Änderung einer Sollwertvorgabe für eine Zwischenkreisspannung $U_{ZwK\ SOLL}$ des Zwischenkreises des Wechselrichters (4) geregelt wird.

**2.** Verfahren nach Anspruch 1, **dadurch gekennzeichnet, dass** die Regelung des Ableitstromes $I_A$ in einem Betriebszustand des Wechselrichters (4) erfolgt, in dem wenigstens eine Bedingung erfüllt ist.

**3.** Verfahren nach Anspruch 2, **dadurch gekennzeichnet, dass** die wenigstens eine Bedingung darin besteht, dass eine Zwischenkreisspannung $U_{ZwK}$ am Eingang der Wechselrichterbrücke (7) kleiner als die zweifache Scheitelspannung Ü des Netzspannungssignals ist.

**4.** Verfahren nach einem der Ansprüche 2oder 3, **dadurch gekennzeichnet, dass** die wenigstens eine Bedingung dann erfüllt ist, wenn eine Zwischenkreisspannung $U_{ZwK}$ einen Spannungswert aufweist, der größer als ein vorbe-stimmbarer erster Spannungsgrenzwert ($U_1$) ist, und wenn die Zwischenkreisspannung $U_{ZwK}$ einen Spannungswert aufweist, der kleiner als ein vorbestimmbarer zweiter Spannungsgrenzwert ($U_2$) ist.

**5.** Verfahren nach Anspruch 2, **dadurch gekennzeichnet, dass** die wenigstens eine Bedingung dann erfüllt ist, wenn der Ableitstrom $I_A$ einen Stromwert aufweist, der größer als ein vorbestimmbarer erster Grenzstromwert ist, wobei der Ableitstrom $I_A$ dann auf einen Stromwert geregelt wird, der kleiner oder gleich einem zweiten vorbestimmbaren Grenzstromwert ist.

**6.** Verfahren nach Anspruch 5, **dadurch gekennzeichnet, dass** für den ersten Grenzstromwert gilt: $I_A= 0$ und dass für den zweiten Grenzstromwert gilt: $I_A = I_{MAX}$, wobei $I_{MAX}$ ein Stromwert ist, über dem der Wechselrichter durch seine Fehlerstromschutzeinrichtung in einen Sicherheitszustand versetzt wird.

**7.** Verfahren nach einem der vorstehenden Ansprüche, **dadurch gekennzeichnet, dass** bei der Bestimmung der Änderung der Sollwertvorgabe für eine Zwischenkreisspannung eine vorgegebene Kennlinie ausgewertet wird.

**8.** Verfahren nach einem der vorstehenden Ansprüche, **dadurch gekennzeichnet, dass** als Wechselrichter (4) ein solcher mit einem eingangsseitigen DC/DC-Wandler (9) verwendet wird.

**9.** Verfahren nach einem der vorstehenden Ansprüche, **dadurch gekennzeichnet, dass** bei der Betriebsführung neben der Regelung des Ableitstromes ein Maximum-Power-Point-Tracking zur Maximierung einer von einem PV-Generator abgegebenen Leistung durchgeführt wird.

**Claims**

**1.** A method for the operational control of a transformerless three-phase inverter (4) designed for DC/AC voltage conversion that has at least one direct-voltage input and a link and that can be connected to a power supply grid via at least one alternating-voltage output (10, 11, 12), the inverter being involved in a power flow interaction with the grid, in such a manner that, during operation of the inverter, a leakage current $I_A$ can occur, wherein the direct-voltage input or inputs of the inverter (4) does or do not have a galvanic connection to or with an N and/or PE potential of the power supply grid,

a) wherein the operational control is carried out by means of a control device,
b) wherein, during the operational control of the inverter (4) for driving a power component assembly of the inverter that has power semiconductors, a pulse width modulation method with a pulse width modulation signal is used, **characterized in that**
c) the pulse width modulation signal of the inverter is generated by a modified sine-delta modulation with time-variant offset, wherein the amplitude of the offset is always chosen to be just as large as is necessary for avoiding overmodulation of the generated PWM signal, and
d) the leakage current $I_A$ is controlled by changing a target value setting $U_{ZwK\ SOLL}$ for a link voltage control of the link of the inverter (4).

**2.** The method as claimed in claim 1, **characterized in that** the leakage current $I_A$ is controlled in an operational state of the inverter (4) in which at least one condition is met.

**3.** The method as claimed in claim 2, **characterized in that** the at least one condition consists **in that** a link voltage $U_{ZwK}$ at the input of the inverter bridge (7) is less than twice the peak voltage $\hat{U}$ of the line voltage signal.

**4.** The method as claimed in one of claims 2 or 3, **characterized in that** the at least one condition is met when a link voltage $U_{ZwK}$ has a voltage value that is greater than a predeterminable first voltage limit ($U_1$) and when the link voltage $U_{ZwK}$ has a voltage value which is less than a predeterminable second voltage limit ($U_2$).

**5.** The method as claimed in claim 2, **characterized in that** the at least one condition is met when the leakage current $I_A$ has a current value that is greater than a predeterminable first current limit, the leakage current $I_A$ then being controlled to a current value that is less than or equal to a second predeterminable current limit.

**6.** The method as claimed in claim 5, **characterized in that** the following holds for the first current limit: $I_A = 0$ and **in that** the following holds for the second current limit: $I_A = I_{MAX}$, $I_{MAX}$ being a current value above which the inverter is transferred into a safe state by its residual-current-operated protective device.

**7.** The method as claimed in one of the preceding claims, **characterized in that**, in the determination of the change of the target value setting for a link voltage, a predetermined characteristic curve is evaluated.

**8.** The method as claimed in one of the preceding claims, **characterized in that** an inverter with a DC/DC converter (9) at the input is used as the inverter (4).

**9.** The method as claimed in one of the preceding claims, **characterized in that** in the operational control, apart from controlling the leakage current, maximum power point tracking is performed for maximizing a power delivered by a PV generator.

**Revendications**

**1.** Procédé, destiné à gérer le fonctionnement d'un onduleur (4) sans transformateur conçu pour une conversion de tension DC/AC, qui comporte au moins une entrée de tension continue, ainsi qu'un circuit intermédiaire et qui par le biais d'au moins une sortie de tension alternative (10, 11, 12) peut se connecter sur un réseau d'alimentation en énergie, avec lequel il se trouve en interaction par flux de puissance, de telle sorte que lors du fonctionnement de l'onduleur, un courant de fuite $I_A$ est susceptible de survenir, la ou les entrées de tension continue de l'onduleur (4) ne comportant aucune liaison galvanique vers ou avec un potentiel N et/ou PE du réseau d'alimentation en énergie,

a) la gestion du fonctionnement s'effectuant à l'aide d'un système de réglage,
b) lors de la gestion du fonctionnement de l'onduleur (4) pour l'activation d'un ensemble de puissance de l'onduleur qui comporte des semi-conducteurs de puissance, un procédé de modulation de largeurs d'impulsions avec un signal de modulation de largeurs d'impulsions étant mis en oeuvre, **caractérisé en ce que**
c) le signal de modulation de largeurs d'impulsions de l'onduleur est généré par une modulation triangulaire sinusoïdale modifiée avec un offset variant dans le temps, l'amplitude de l'offset n'étant toujours choisie que dans une valeur telle que nécessaire pour éviter une surmodulation du signal de modulation de largeurs d'impulsions généré, et
d) le courant de fuite $I_A$ est réglé par une modification de la prédéfinition de la valeur de consigne pour une tension de circuit intermédiaire $U_{ZwK\ SOLL}$ du circuit intermédiaire de l'onduleur (4).

**2.** Procédé selon la revendication 1, **caractérisé en ce que** le réglage du courant de fuite $I_A$ s'effectue dans un état de fonctionnement de l'onduleur (4) dans lequel au moins une condition est satisfaite.

**3.** Procédé selon la revendication 2, **caractérisé en ce que** l'au moins une condition réside **en ce qu'**une tension de circuit intermédiaire $U_{ZwK}$ à l'entrée du pont onduleur (7) est inférieure au double de la tension de crête $\hat{U}$ du signal de tension du réseau.

**4.** Procédé selon l'une quelconque des revendications 2 ou 3, **caractérisé en ce que** l'au moins une condition est satisfaite lorsqu'une tension de circuit intermédiaire $U_{ZwK}$ présente une valeur de tension qui est supérieure à une première valeur limite de tension ($U_1$) prédéfinissable et lorsque la tension de circuit intermédiaire $U_{ZwK}$ présente une valeur de tension qui est inférieure à une deuxième valeur limite de tension ($U_2$) prédéfinissable.

5. Procédé selon la revendication 2, **caractérisé en ce que** l'au moins une condition est satisfaite lorsque le courant de fuite $I_A$ présente une valeur de courant qui est supérieure à une première valeur limite de courant prédéfinissable, le courant de fuite $I_A$ étant alors réglé à une valeur de courant qui est inférieure ou égale à une deuxième valeur limite de courant prédéfinissable

6. Procédé selon la revendication 5, **caractérisé en ce que** pour la première valeur limite de courant, on applique : $I_A = 0$ et **en ce que** pour la deuxième valeur limite de courant, on applique : $I_A = I_{MAX}$, sachant que $I_{MAX}$ est une valeur de courant au-dessus de laquelle l'onduleur est placé dans un état de sécurité par son dispositif de protection contre les courants de défaut.

7. Procédé selon l'une quelconque des revendications précédentes, **caractérisé en ce que** lors de la détermination de la modification de la prédéfinition de la valeur de consigne pour une tension de circuit intermédiaire, une courbe caractéristique prédéfinie est évaluée.

8. Procédé selon l'une quelconque des revendications précédentes, **caractérisé en ce qu'**en tant qu'onduleur (4) on en utilise un tel avec un convertisseur DC/DC (9) côté entrée.

9. Procédé selon l'une quelconque des revendications précédentes, **caractérisé en ce que** lors de la gestion du fonctionnement, en plus du réglage du courant de fuite, on procède à un Maximum-Power-Point-Tracking pour maximiser une puissance restituée par un générateur PV.

Fig. 1

EP 2 375 552 B1

Fig. 2

13

Fig. 3a

Fig. 3b

Fig. 3d

Fig. 3c

Fig. 4

EP 2 375 552 B1

$$100 \quad \boxed{U_{Zwk\,SOLL} \geq U_2}$$

$$101 \quad \boxed{\text{Messung } I_A}$$

$$102 \quad \boxed{\text{Bestimmung } \Delta U}$$

$$103 \quad \boxed{U_4 = \Delta U + U_1}$$

$$106 \quad \boxed{U_{ZwkSOLL} = U_{ZwkSOLL} - k_4 * (U_{ZwkSOLL} - U_4)}$$

$$104 \quad \left\langle U_{ZwkSOLL} > U_4 \right\rangle \quad \text{nein}$$

ja

$$105 \quad \boxed{U_{ZwkSOLL} = U_{ZwkSOLL} - k_3 * (U_{ZwkSOLL} - U_4)}$$

$1 > k_3 > 0$
$1 \geqslant k_4 > 0$

# Fig. 5

Fig. 6

$$U_{ZwK\ SOLL} \geq U_2$$ — 200

Messung $I_A$ — 201

$I_A < I_{MAX}$ ? — 202

nein

204 — $U_{ZwK\ SOLL} < U_2$ ?

nein

ja

203 — $$U_{ZwK\ SOLL} = U_{ZwK\ SOLL} - k_1 * (I_{MAX} - I_A)$$

ja

205 — $$U_{ZwK\ SOLL} = U_{ZwK\ SOLL} - k_2 * (I_{MAX} - I_A)$$

$k_1, k_2 > 0$

## Fig. 7

Fig. 8

EP 2 375 552 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1641111 A2

- EP 2107672 A2